# EUROPEAN PATENT APPLICATION

(11) **EP 4 763 344 A1**
(43) Date of publication of application: **24.06.2026**
(21) Application number: 25216516.2
(22) Date of filing: 18.11.2025
(51) Int. Cl.: B05B 7/20, B05B 13/04

(54) **ROBOTIC SPRAY SYSTEM**

(30) Priority: 18.12.2024 GB 202418581
(71) Applicant: Rolls-Royce plc, London N1 9FX (GB)
(72) Inventor: Lokachari, Siddharth, Derby, DE24 8BJ (GB); Hussain, Tanvir, Derby, DE24 8BJ (GB); Norton, Andrew D, Derby, DE24 8BJ (GB)
(74) Representative: Rolls-Royce plc

(57) **Abstract**

A hyper-redundant manipulator spray system (100) for depositing an engineering coating material (102) on a component (105) located within a gas turbine engine (10). The system has a hyper-redundant manipulator arm (110), an end effector (120), an actuator pack and a tank (150) for holding the engineering coating material (102) to be deposited on the component (105). The end effector (120) has an atomizing nozzle unit (125) that atomizes a suspension of the engineering coating material and directs it into a flame (166) of a combusted flammable fluid from a burner head (130) that sprays the atomized engineering coating material on to the component (105).

## Description

### FIELD

The present invention relates to a robotic spray system, more specifically a hyper-redundant manipulator spray system and a method for depositing a coating material on a component that is located within a gas turbine engine.

### BACKGROUND

Spray coatings are used in a number of industries to supply a thin deposition of material onto a substrate. The material to be coated is typically supplied in suspension in a solvent and passed through a nozzle to propel it onto the target substrate.

Despite spray coating being generally well-known many issues still arise with respect to what materials are suitable for spray coating and what equipment is available to apply such materials to particular substrates. Such issues are exacerbated when using applying spray coating technologies to repair complex machines such as gas turbine engines, especially gas turbine aircraft engines, where the coating is typically required at a location that is generally inaccessible without stripping at least part of the engine and where the accuracy and effectiveness of the repair is critical to the safety of the passengers and the crew of an aircraft that is powered by the engine. The need to provide the necessary tooling for the spray coating typically means removing the component from the engine and taking it to specialist thermal spraying equipment to be suitably coated.

When spray coating gas turbine engines the coating is typically an engineering coating that is applied to a turbine blade or vane and the engineering coating material is often a yttrium-stabilized zirconia (YSZ), which is deposited using customary engineering spraying methodologies, notably atmospheric plasma spraying (APS), high-velocity oxy-fuel (HVOF) spraying, or suspension plasma spraying (SPS).

If the engineering coating becomes worn or damaged the turbine blade or vane needs to be removed. APS deposition involves exposing YSZ powder to an exceedingly high-temperature plasma, after which it is propelled onto the relevant surface of the component, where it solidifies quickly and forms layers. Upon impact with the surface, particles within the engineering coating material disperse and the coating solidifies. The equipment that is currently used for APS, HVOF and SPS deposition is too large to be used in an in situ setting within a gas turbine engine and it typically requires using atmospheric controlled booths with furnaces.

Consequently, there is a need to provide an improved method and system for applying engineering coating materials to components within a gas turbine engine.

### SUMMARY

In a first aspect a hyper-redundant manipulator spray system for depositing an engineering coating material on a component that is located within a gas turbine engine, the hyper-redundant manipulator spray system comprises: a hyper-redundant manipulator arm that has a proximal end and a distal end; an end effector that is located at the distal end of the hyper-redundant manipulator arm, the end effector having an atomizing nozzle unit and a burner head, the burner head having a supply of a flammable fluid; an actuator pack that is located at the proximal end of the hyper-redundant manipulator arm and controls movement of the hyper-redundant manipulator arm; and a tank for holding the engineering coating material to be deposited on the component; wherein the burner head has at least one jet and an air nozzle, the burner head being configured to combust the flammable fluid supplied by the supply of flammable fluid and eject the combusted flammable fluid from the jet to form a combustion zone around a resulting flame, the air nozzle being aligned with the jet to direct a flow of air from a supply of air towards the component; and the atomizing nozzle unit is configured to receive a supply of a suspension of engineering coating material from the tank and is provided with a pressurised gas feed to atomize the material, the atomizing nozzle unit being positioned to direct a spray of the engineering coating material into the flame provided by the burner head that propels the spray of the engineering coating material on to the component upon which the engineering coating material solidifies.

In some embodiments the tank has an agitation device for stirring or otherwise agitating the suspension of thermal coating barrier material within the tank.

In some embodiments the air nozzle provides a flow of air at a pressure of from 120 to 1500 kPa (1.2 to 15 bar).

In some embodiments a conduit connects the tank and the atomizing nozzle unit and a flow regulator is provided for maintaining a constant flow rate of engineering coating material between the tank and the atomizing nozzle unit.

In some embodiments the flow regulator is formed or located in the conduit that connects the tank and the atomizing nozzle unit.

In some embodiments the tank is located at or near the proximal end of the hyper-redundant manipulator arm.

In some embodiments a flow of air is supplied to the atomizing nozzle unit from a source of air to atomize the suspension of engineering coating material within the atomizing nozzle unit.

In some embodiments the flow of air is supplied to the atomizing nozzle unit at a pressure of from 120 to 1500 kPa (1.2 to 15 bar)

In some embodiments the atomizing nozzle unit has a pressure regulator that regulates the flow of atomized engineering coating material from the atomizing nozzle unit into the combustion zone.

In some embodiments the pressure regulator provides the engineering coating material into the combustion zone at a flow rate of from 0.5 to 50 ml/min.

In some embodiments the atomizing nozzle unit has an atomizing nozzle unit outlet that is positioned to spray the engineering coating material from 5 to 75 mm above the flame plume.

In some embodiments the atomizing nozzle unit is configured to spray the engineering coating material at an angle to the flame.

In some embodiments the atomizing nozzle unit is configured to spray the engineering coating material perpendicular to the flame.

In some embodiments the atomizing nozzle unit is configured to spray the engineering coating material in line with the flame.

In some embodiments the end effector is coupled to the hyper-redundant manipulator arm with a rotatable coupling and a drive motor is provided that enables the end effector to oscillate its orientation relative to the hyper-redundant manipulator arm.

In some embodiments the engineering coating material is an environmental barrier coating material for forming an environmental barrier coating (EBC) on the component.

In some embodiments the engineering coating material is a thermal barrier coating material for forming a thermal barrier coating on the component.

In a second aspect a method for depositing an engineering coating material on a component that is located within a gas turbine engine is provided. The method comprises the steps of: providing the hyper-redundant manipulator spray system of the first aspect; positioning the hyper-redundant manipulator arm of the hyper-redundant manipulator spray system within a workspace in which the component is located; supplying a flammable fluid to at least one jet of the burner head and combusting the flammable fluid to form a flame; supplying a suspension of an engineering coating material to the atomizing nozzle unit and directing a spray of atomized engineering coating material into the flame; moving the end effector along a path to deposit the engineering coating material from the flame on the component; and turning off the supply of the flammable fluid to the at least one jet of the burner head and the supply of the suspension of the engineering coating material to the atomizing nozzle unit.

The present invention provides a hyper-redundant manipulator spray system and method for depositing an engineering coating material on a component that is located within a gas turbine engine. The gas turbine engine may take various forms . For example, the gas turbine engine may comprise an engine core comprising a turbine, a combustor, a compressor, and a core shaft connecting the turbine to the compressor. Such a gas turbine engine may comprise a fan (having fan blades) located upstream of the engine core. The gas turbine engine may have a gearbox that receives an input from the core shaft and outputs drive to the fan so as to drive the fan at a lower rotational speed than the core shaft.

The term "hyper-redundant manipulator" as used herein is a continuously bending actuatable structure with an extremity fixed to a base that contain actuations and control hardware.

The term "hyper-redundant manipulator arm" as used herein means an arm of a hyper-redundant manipulator.

The term "actuator pack" as used herein means that part of a hyper-redundant manipulator that controls movement of a hyper-redundant manipulator arm. The movement of the hyper-redundant manipulator arm is typically achieved by tensioning or relaxing a plurality of actuators, e.g. in the form of tendons that run through the joints of the hyper-redundant manipulator arm.

The term "end effector" as used herein means that part of a hyper-redundant manipulator arm that includes tooling and/or inspection equipment for the function of the hyper-redundant manipulator arm is intended to perform.

The term "component" as used herein means a part of a machine such as a gas turbine engine. The component may be a gas turbine aircraft engine component. The component may be formed from a base material, for example a titanium-based superalloy or a nickel-based superalloy.

The term "engineering coating" as used herein means a coating that alters the surface properties of the substrate to which it is applied. It may be a thermal barrier coating (TBC) i.e. a thermally insulating material that is applied to a substrate that is typically exposed to elevated temperatures, or an environmental barrier coating (EBC) i.e. a barrier coating that is applied to a substrate that is typically exposed to environmental stresses such as icing and erosion.

The term "engineering coating material" as used herein is material from which an engineering coating is formed. It is typically applied to the surface of a component, e.g. a gas turbine engine component, that requires protection to extending component life. An engineering coating material may be an environmental barrier coating material from which an environmental barrier coating may be formed or it may be a thermal barrier coating material from which a thermal barrier coating may be formed.

The term "environmental barrier coating" or "EBC" as used herein is a barrier coating that is applied to a substrate that is typically exposed to environmental stresses such as icing and erosion. Environmental barrier coatings are typically applied to gas turbine engine components to increase their service life. They tend to be stabilized ceramics that can sustain a fairly high temperature gradient. They are often used to prevent water vapour degradation of gas turbine engine components that are made from SiC-SiC ceramic matric composite materials (CMCs).

The term "thermal barrier coating" or "TBC" as used herein is a barrier coating that is applied to a substrate that is typically exposed to elevated temperatures. Such coatings can allow for higher operating temperatures while limiting the thermal exposure of structural components, extending component life by reducing oxidation and thermal fatigue.

The term "flame spray" as used herein is a process that uses an oxy-fuel flame to melt wires and in some cases powders or ceramic rods. The molten material is then atomised with compressed air to create a spray stream that applies a coating onto a surface being sprayed.

Throughout this specification and in the claims that follow, unless the context requires otherwise, the word "comprise" or variations such as "comprises" and "comprising", will be understood to imply the inclusion of a stated integer or group of integers but not the exclusion of any other stated integer or group of integers.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments of the invention will now be described by way of example with reference to the accompanying drawings in which:
**FIG. 1** is a sectional side view of a gas turbine engine;
**FIG. 2** is a schematic representation of a first embodiment of a hyper-redundant manipulator spray system for depositing an engineering coating material on a component that is located within a gas turbine engine according to the present invention;
**FIG. 3** is a more detailed schematic representation of the hyper-redundant manipulator spray system of FIG.2;
**FIG. 4** is a schematic representation of a top view of a second embodiment of a hyper-redundant manipulator spray system according to the present invention ;
**FIG. 5** depicts a polished cross-sectional micrograph of a coating applied to a gas turbine engine component using the hyper-redundant manipulator spray system of FIG. 2;
**FIG. 6** depicts another polished cross-sectional micrograph of a coating applied to a gas turbine engine component using the hyper-redundant manipulator spray system of FIG.2;
**FIG. 7** depicts yet another polished cross-sectional micrograph of a coating applied to a gas turbine engine component using the hyper-redundant manipulator spray system of FIG.2; and
**FIG. 8** is a flow diagram of the method of the present invention.

The following table lists the reference numerals used in the drawings with the features to which they refer:

| Ref no. | Feature | Figure |
|---|---|---|
| A | Core air flow | 1 |
| B | Bypass air flow | 1 |
| 9 | Principal rotational axis (of engine) | 1 |
| 10 | Gas turbine engine | 1 |
| 11 | Engine core | 1 |
| 12 | Air intake | 1 |
| 14 | Low pressure compressor (LPC) | 1 |
| 15 | High pressure compressor (HPC) | 1 |
| 16 | Combustion equipment | 1 |
| 17 | High pressure turbine (HPT) | 1 |
| 18 | Bypass exhaust nozzle | 1 |
| 19 | Low pressure turbine (LPT) | 1 |
| 20 | Core exhaust nozzle | 1 |
| 21 | Nacelle | 1 |
| 22 | Bypass duct | 1 |
| 23 | Fan | 1 |
| 26 | Shaft | 1 |
| 27 | Shaft | 1 |
| 30 | Epicyclic gearbox | 1 |
| 100 | Hyper-redundant manipulator spray system | 2 |
| 102 | Engineering coating material | 2 3 4 |
| 105 | Component e.g. gas turbine engine component | 2 3 4 5 |
| 110 | Hyper-redundant manipulator arm | 2 |
| 111 | Proximal end of the hyper-redundant manipulator arm | 2 |
| 112 | Distal end of the hyper-redundant manipulator arm | 2 |
| 120 | End effector | 2 3 4 |
| 125 | Atomizing nozzle unit | 2 3 |
| 127 | Flow of air (to atomizing nozzle unit) | 3 |
| 128 | Atomizing nozzle unit outlet | 3 |
| 129 | Pressure regulator | 3 |
| 130 | Burner head | 2 3 4 |
| 132 | Supply line (for flammable material) | 3 |
| 140 | Actuator pack | 2 |
| 145 | Controller | 2 |
| 150 | Tank | 2 3 |
| 155 | Conduit | 2 3 |
| 157 | Agitation device | 3 |
| 158 | Flow regulator | 3 |
| 160 | Jet(s) | 2 3 4 |
| 162 | Air nozzle | 2 3 |
| 164 | Combustion zone | 3 4 |
| 166 | Flame | 3 4 |
| 167 | Flame path hot combustion zone | 4 |
| 168 | Flow of air (from air nozzle 162 of burner head 130) | 3 |
| 170 | Pressurised gas feed | |
| 172 | Spray | 3 |
| 180 | Engineering coating | 4 |
| 182 | Path | 4 |
| 201 | Large vertical crack in engineering coating | 5 |
| 202 | Small vertical crack in engineering coating | 5 |
| 203 | Large vertical crack in engineering coating | 5 |
| 300 | Method | 6 |
| 310 | Step | 6 |
| 320 | Step | 6 |
| 330 | Step | 6 |
| 340 | Step | 6 |
| 350 | Step | 6 |
| 360 | Step | 6 |

### DETAILED DESCRIPTION

Aspects and embodiments of the present invention will now be discussed with reference to the accompanying drawings. Further aspects and embodiments will be apparent to those skilled in the art.

The present invention provides a hyper-redundant manipulator spray system and method for depositing an engineering coating material on a component that is located within a gas turbine engine. While thermal spray coating has been commonly used to apply protective coatings to various substrates the technique is generally not suitable when the substrate is located within a confined or otherwise restricted space. This is because of difficulties in bringing the necessary equipment to the relevant workspace and accurately the thermal spray coating material to the relevant substrate within that workspace. These difficulties often mean the component that requires coating or coating repair must be removed from the engine and taken to specialist thermal spraying equipment to be suitably coated. Such requirements increase both the cost of repair and the length of down time for the gas turbine engine from which the component was removed.

The hyper-redundant manipulator spray system of the present invention is able to deposit sub-micron or even nano size particulates using miniature combustion flame spray technology to achieve durable nano-structed coating from suspension feedstock.

Referring now to the drawings:

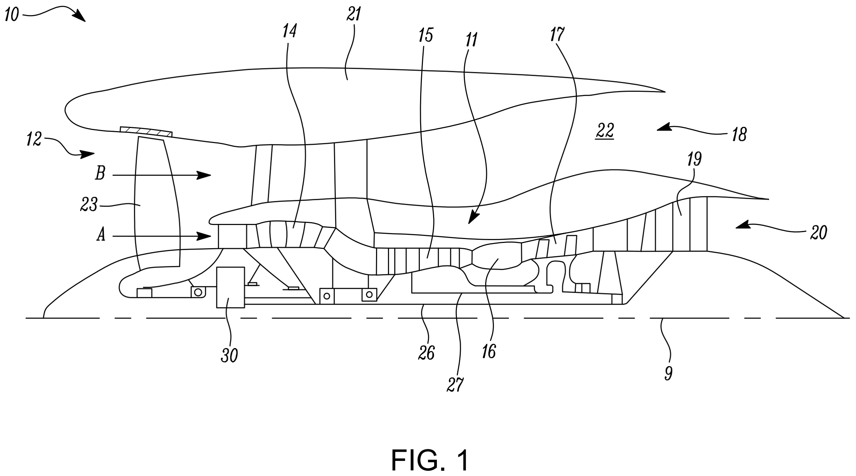

**FIG. 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines may have alternative configurations. For example, such engines may have an alternative number of compressors and/or turbines and/or an alternative number of interconnecting shafts. By way of further example, the gas turbine engine shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. **In** some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Coatings can be applied to a number of systems to improve their performance. Coatings can be applied to provide protection to a number of components material; these coatings can provide protection from, for example, corrosion, thermal properties. In some instances coatings may also be applied to improve the aesthetic appearance of a component.

One example of providing an engineering coating is the use of thermal barrier coatings for components within the heat zone of a gas turbine engine. Thermal barrier coatings are selected according to the properties of the materials that are used to form them. For example, one of the most common thermal barrier coatings used within the turbine and combustor section is yttria-stabilised zirconia (YSZ).

YSZ is a ceramic in which the cubic structure of zirconium dioxide is stabilized by the addition of yttrium oxide. Obtaining a stabilized coating is difficult because the volume of the zirconium structure needs to be increased to accommodate the yttrium. Therefore, deposition of the material is very difficult, as the material needs to be heated and deposited under defined conditions.

Similar problems are also present with the deposition of a number of other different material systems. This is because the materials need to be heated and then allowed to cool on the substrate in a defined way.

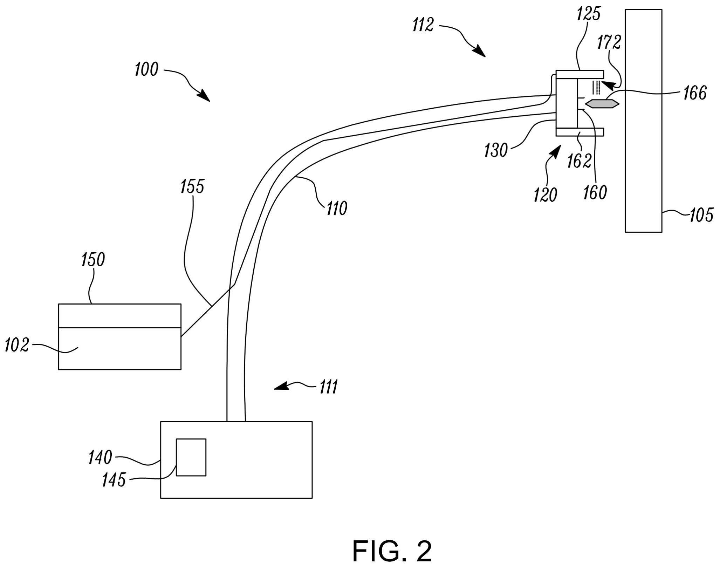

**FIG. 2** is a schematic representation of an embodiment of a hyper-redundant manipulator spray system 100 for depositing an engineering coating material on a component that is located within a gas turbine engine. The hyper-redundant manipulator spray system 100 has a hyper-redundant manipulator arm 110. Movement of the hyper-redundant manipulator arm 110 is controlled by an actuator pack 140 that may include a controller 145.

The hyper-redundant manipulator arm 110 has a proximal end 111, i.e. the end that is proximal to the actuator back 140, and a distal end 112, i.e. the end this is distal to the actuator back 140 An end effector 120 is provided at the distal end 112 of the hyper-redundant manipulator arm 110. The end effector 120 includes tooling for applying the engineering coating material 102 to the component 105 .That tooling includes an atomizing nozzle unit 125 and a burner head 130.

The hyper-redundant manipulator spray system 100 has a tank 150 that holds the engineering coating material 102 that is to be deposited on the component 105. The tank 150 may take any suitable form. The engineering coating material 102 is in the form of a suspension. The atomizing nozzle unit 125 is configured to receive a supply of the suspension of engineering coating material 102 from the tank 150 via a conduit 155 that runs between the tank and the 150 and the atomizing nozzle unit 125. The tank 150 is suitably located to supply the atomizing nozzle unit 125 with the suspension of engineering coating material 102. In the embodiment shown the tank 150 is located adjacent the actuator pack 140 however in other embodiments the tank 150 is located closer to the atomizing nozzle unit 125 and therefore requires a shorter conduit 155.

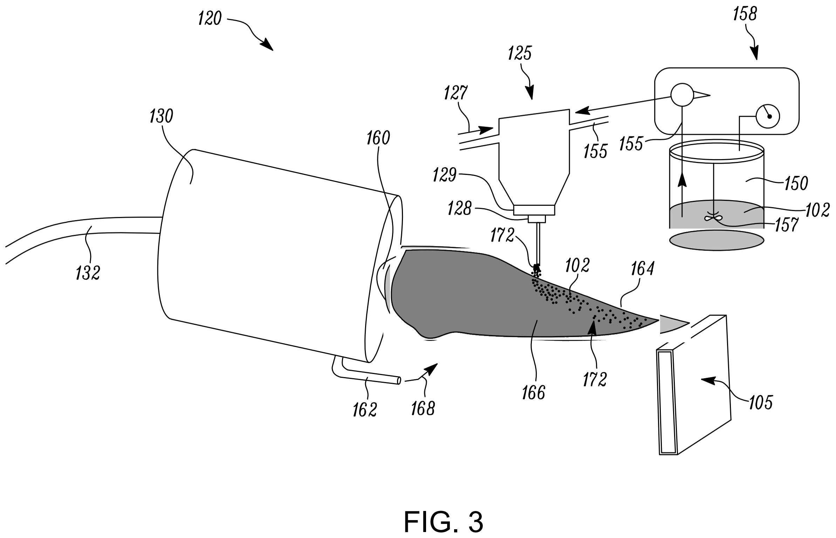

The atomizing nozzle unit 125 of the hyper-redundant manipulator spray system 100 atomises the suspension of engineering coating material 102 that it receives from the tank 150 via the conduit 155 and provides a spray 172 of the engineering coating material 102. The atomizing nozzle unit 125 is shown in more detail in FIG. 3 and is further described with that figure below.

The burner head 130 of hyper-redundant manipulator spray system 100 combusts a flammable fluid from a supply of flammable fluid (not shown) to provide a flame 166 that propels the spray 172 of the engineering coating material formed by the atomizing nozzle unit 125 on to the component (105). The burner head 130 has at least one jet 160 through which the combusted flammable fluid emerges as a flame 166 and at least one air nozzle 162. The burner head 130 is shown in more detail in FIG. 3 and is further described with that figure below. The flammable fluid may be supplied from the supply of flammable fluid and through the hyper-redundant manipulator arm via a supply line (132) and into the burner head 130 of the end effector 120 to supply the jet(s) 160.

The flammable fluid may take various forms for its required purpose. The flammable fluid may be a gas, for example oxy-acetylene, propylene, liquified petroleum gas (LPG), propane, natural gas, hydrogen, MAPP gas (a stabilized mixture of methylacetylene, propadiene and propane), or a mixture thereof. The flammable fluid may be a liquid fuel, for example gasoline (e.g. petrol or diesel), kerosene, an aviation fuel, or a mixture thereof. Other suitable flammable fluids would be apparent to a person skilled in the art and may at least in part be determined by the configuration of the burner head 130 of the end effector 120 of the hyper-redundant manipulator spray system 100.

The atomizing nozzle unit is configured to deliver the spray 172 of atomized of the engineering coating material at a desired angle with respect to the flame 166 that emanates from the jet 160. In the embodiment shown in FIG.1 the engineering coating material is sprayed at an angle that is perpendicular, or at least substantially perpendicular, to the flame. In other embodiments the atomizing nozzle unit may be configured to spray the engineering coating material at some other angle to the flame, e.g. 30 degrees, 45 degrees or 60 degrees, typically spraying in the direction towards of the end of the flame that is furthest from the jet 160 from which the flame emanates, or in line with, or at least substantially in line with the flame i.e. about 0 degrees.

The air nozzle 162 of the burner head 130 is positioned to feed the flame 166 emanating from the jet 160 with oxygen and direct the flame 166, and the spray 172 of the engineering coating material 102 supplied to the flame, towards the surface of the component 105 upon which the engineering coating material is to be deposited. The air nozzle 162 is supplied with air from a suitable source (not shown), e.g. a pressurized gas container, a compressor, or ventilated through a conduit.

In the embodiment shown in FIG. 2 the burner head 130 has a single jet 160 but in other embodiments the burner head 130 has a plurality of jets 160, e.g. two, three, four, five, six or more jets. In such embodiments the jets may be configured in any in any suitable configuration to obtain a desired heat profile for the burner head. For example, the jets may be configured so that flames from the jets overlap to create an enlarged high temperature area with a heated zone.

The burner head 130 has a suitable ignition source (not shown) to create the flame 166 from the flammable fluid that is supplied to it. For example, the ignition source may be a piezo electric spark or a pilot light.

The hyper-redundant manipulator spray system 100 directs the spray 172 of the engineering coating material 102 supplied to the flame 166 from atomizing nozzle unit 125 towards and onto the surface of the component 105 thereby depositing the engineering coating material on the component 105. The engineering coating material will quickly dry or solidify to complete the desired engineering coating to the component 105. In some instances, largely depending on the engineering coating material, the air nozzle 162 of the burner head 130 may be employed to provide a stream of air to assist in the drying or solidifying of the engineering coating on the component.

The successful application of the engineering coating material depends on the suitable manipulation of the hyper-redundant manipulator arm 110 of the hyper-redundant manipulator spray system 100. While that manipulation is controlled with the assistance of suitable actuators and supporting software, it nevertheless requires the guidance of one or more skilled operators of hyper-redundant manipulator equipment. In some embodiments that operation can be assisted by the use of suitable inspection equipment (not shown), for example one or more cameras or sensors that are provided in or with the end effector 120.

**FIG. 3** is a schematic representation of the burner head 130 and the atomizing nozzle unit 125 of the end effector 120 of the embodiment of the hyper-redundant manipulator spray system 100 that is shown in FIG. 2.

The end effector 201 is connected to the distal end 112 of the hyper-redundant manipulator arm 110. The burner head 130 combusts a flammable fluid from a supply of flammable fluid (not shown) that is connected the rear of the burner head 130 by a supply line 132. The combusted flammable fluid provides a flame 166 that defines a combustion zone 164 that extends from the jet 160. A flow of air 168 from the air nozzle 162 is aligned in the direction of the jet 160 or rather the direction of the flame 166 that emerges from the jet 160 so that the flow of air 168 impinges upon the component 105 to be coated at the same point where the engineering coating material 102 is to be deposited or at least close to that point. The provision of the flow of air 168 from the air nozzle 162 can also prevent thermal shock by helping to moderate the cooling rate of the atomised engineering coating material as it lands on the desired surface of the component 105, thereby facilitating a smooth deposition of the engineering coating material.

In the embodiment shown in FIG. 3 the burner head 130 has a single air nozzle 162 however in other embodiments the burner head has a plurality of air nozzles 162, e.g. two, three, four or more air nozzles, which are configured so flows of air 168 impinge upon the entire intended deposition area for the engineering coating material on the component.

In the embodiment shown in FIG. 3 the air nozzle 162 extends from a side of the burner head 130 and bends in or at least towards the direction of the jet 160 and the flame 166 however in other embodiments the air nozzle 162 or plurality of air nozzle 162 is or are integrated into the burner head 130 or the end effector 120.

As mentioned above, the air nozzle 162 of the burner head 130 supplies a stream of air 168 onto the component 105 where the engineering coating material 102 will be applied. The air may be simply atmospheric air or it may contain one or more other gases e.g. nitrogen or an inert gas. The air may supplied at or near atmospheric pressure or it may be supplied at a high pressure.

The flow of air 168 can be provided in any suitable manner. It may for example be provided by an air pump (not shown) that is located within the burner head 120 or within the end effector 120 or external to the end effector 120, e.g. located at or near the proximal end 111 of the hyper-redundant manipulator arm 110, i.e. outside of the working environment of the hyper-redundant manipulator arm 110.

In some embodiments the air is supplied by the air nozzle 162 or the plurality of air nozzles at a pressure of 120 to 1500 kPa (1.2 to 15 bar), e.g. 400 to 600 kPa (4 to 6 bar). This provides a cooling effect that can facilitate the desirable formation of layers of engineering coating material on the component.

As shown in FIG. 3, the end effector 120 includes an atomizing nozzle unit 125 that atomizes the suspension of engineering coating material 102 that it receives from the tank 150 via the conduit 155 and provides a spray 172 of the engineering coating material 102 via an atomizing nozzle unit outlet 128 into the flame 166 generated by the burner head 130. In the embodiment shown in FIG.3 the engineering coating material 102 is sprayed at an angle that is perpendicular, or at least substantially perpendicular, to the flame 166. In other embodiments the atomizing nozzle unit may be configured to spray the engineering coating material at some other angle to the flame, or in line with the flame.

In the embodiment shown in FIGS. 2 and 3 the atomizing nozzle unit 125 is located alongside the burner head 130 but in other embodiments the atomizing nozzle unit 125 and the burner head 130 may be integrated.

The atomizing nozzle unit 125 is supplied with engineering coating material 102 in the form of a suspension from the tank 150. The tank 150 may take any suitable form. In the embodiment shown in FIG. 3 the tank is cylindrical and is separate from the atomizing nozzle unit 125 and indeed the end effector 120 however in other embodiments the tank 150 may be integrated with the atomizing nozzle unit 125 and the end effector 120. The choice of configuration will generally depend on the volume of engineering coating material 102 that is to be deposited on the component and the space available for the hyper-redundant manipulator arm 110 within the gas turbine engine 10. Where a large volume of engineering coating material 102 is required the tank 150 may be best located at or near the proximal end 111 (see FIG. 2) of the hyper-redundant manipulator arm 110, i.e. outside of the working environment of the hyper-redundant manipulator arm.

The engineering coating material 102 to be deposited on to the component 105 is supplied to the atomizing nozzle unit 125 by the conduit 155 that runs along the most of the length of the hyper-redundant manipulator arm 110. In the embodiment shown in FIG. 3 the tank 150 is supplied with an agitation device 157 that stirs or otherwise agitates the suspension of engineering coating material 102 within the tank 150 to ensure that the suspension remains at least substantially homogeneously. The agitating device 157 can take any suitable form. In the embodiment shown in FIG. 3 the agitation device 157 has paddle that rotates on a rotor to stir the engineering coating material. In other embodiments the agitation device 157 comprises a transducer that shakes the tank 150 instead.

The conduit 155 that carries the engineering coating material 102 to be deposited onto the component 105 may be provided with a flow regulator 158 that serves to ensure a desired amount of the suspension of engineering coating material is supplied from the tank 150 to the atomizing nozzle unit 125. The flow regulator 158 can take many suitable forms and may include a rotameter.

The atomizing nozzle unit 125 is supplied with the suspension of engineering coating material 102 from the tank 150 and supplied with a flow of air 127 from a source of air (not shown) that is used by the atomizing nozzle unit 125 to atomize the suspension of engineering coating material that is to be deposited on the component 105. The air may be simply atmospheric air or it may contain one or more other gases, e.g. nitrogen or an inert gas. The flow of air 127 can be provided in any suitable manner. It may for example be provided by an air pump (not shown) that is located within the end effector 120 or external to the end effector 120, e.g. located at or near the proximal end 111 of the hyper-redundant manipulator arm 110, i.e. outside of the working environment of the hyper-redundant manipulator arm 110. Alternatively it may be provided by the same source of air as the flow or air 168 from the air nozzle 162 of the burner head 130.

The flow of air 127 to the atomizing nozzle unit 125 may be supplied from the source of air at a pressure from 120 to 1500 kPa (1.2 to 15 bar), e.g. from 300 to 700 kPa (3 to 7 bar).

**In** some embodiments the atomizing nozzle unit 125 includes a pressure regulator 129 that regulates the flow of atomized engineering coating material 102 that is delivered by the atomizing nozzle unit 125 via the atomizing nozzle unit outlet 128 into the combustion zone 164. The pressure regulator 129 may, for example, provide the atomized engineering coating material at a flow rate of from 0.5 to 50 ml/min, e.g. from 1 to 30 ml/min.

The atomized engineering coating material 102 that exits the atomizing nozzle unit 125 is directed into the combustion zone 164 defined by the flame 166 provided by the burner head 130 by combusting the flammable fluid provided by the supply line 132. The flame 166, assisted in part by the flow of air 168 from the air nozzle 162 of the burner head 130, propels the atomized engineering coating material 102 onto the surface of the component 105 where it cools, typically in layers, to provide the desired engineering coating for the component.

In use the hyper-redundant manipulator arm 110 of the hyper-redundant manipulator spray system 100 may be controlled so that the end effector 120 moves with respect to the component 105. In that way a strip of engineering coating can be applied to the component.

The quality of the engineering coating that is formed on a component is determined in part by maintaining a suitable distance between the atomizing nozzle unit outlet 128 and the surface of the component 105 upon which the atomized engineering coating material is deposited. This distance is the stand-off distance and is typically from 5 mm to 75 mm, e.g. from 15 mm to 40 mm.

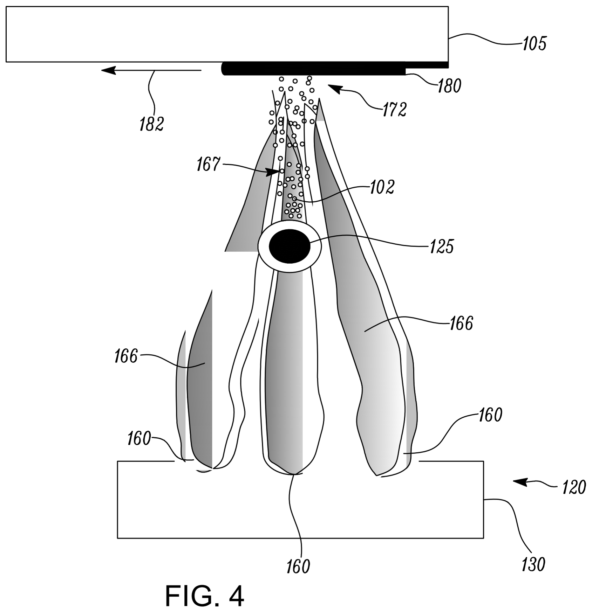

**FIG. 4** is a schematic representation presents a close-up top view of a second embodiment of the hyper-redundant manipulator spray system 100. that is shown in FIGS. 2 and 3 of the drawings. In this second embodiment the burner head 130 of the end effector 120 has three jets 160 and a flame 166 emanates from each of those jets 160. The jets 160 are configured so that the flames coalesce and converge to form a single combustion zone 164. The second embodiment is otherwise identical to the first embodiment that is shown in FIGS. 2 and 3.

In FIG. 4 the atomizing nozzle unit outlet 128 of the atomizing nozzle unit 125 is shown positioned above a middle portion of the combustion zone 164. The atomizing nozzle unit outlet 128 is aligned substantially tangentially to a horizontal plane that passes through the three jets 160 of the burner head 130 which helps to achieve a consistent and uniform deposition rate, especially as the end effector 120 moves in a direction that is in parallel with the surface of the component 105 that is being coated with the engineering coating material. In this way the atomizing nozzle unit outlet 128 dispenses the engineering coating material into a flame path hot combustion zone 167 created by the three jets 160 that leads to the surface of the component 105 that is to be coated. Once the atomised engineering coating material 102 strikes the component 105 it forms a layer of an engineering coating 180 on the component 105, the thickness of the layer being dependent upon various parameters including the amount of time that the spray 172 of atomized engineering coating material is directed to the same point of the component and the volume of engineering coating material that is delivered to the component over that time.

As mentioned above, in use the hyper-redundant manipulator arm 110 may be controlled so that the end effector 120 moves with respect to the component 105 thereby applying a strip of engineering coating to the component. FIG. 4 shows a path 182 being traced laterally and linearly along the component 105 to build up a strip of engineering coating 180 along the component 105.

As also mentioned above (but not shown in FIG. 4), the presence of a flow of air 168 from the air nozzle 162 of the burner head 130 can moderate the cooling of the atomized engineering coating material 102 as it lands on the component 105, thereby avoiding thermal shock and facilitating a smooth deposition of engineering coating material on the component 105.

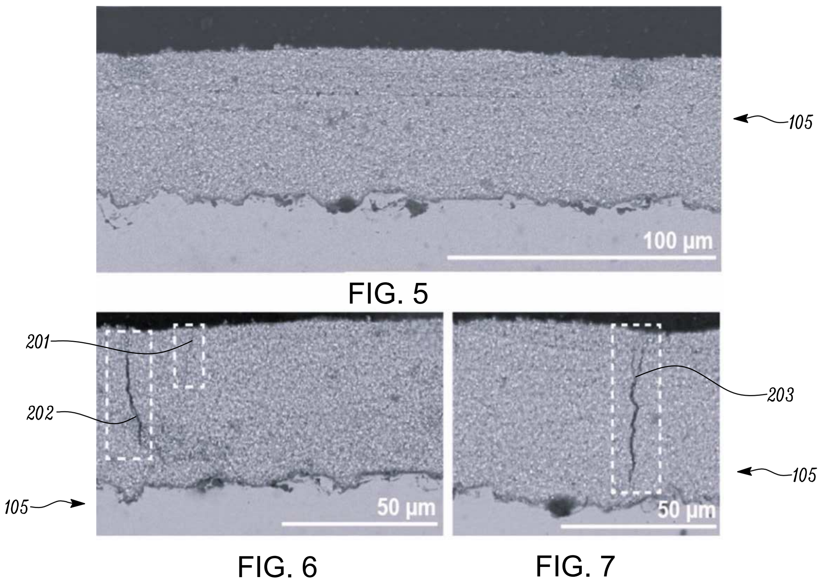

**FIGS. 5, 6 and 7** depict polished cross-sectional micrographs of engineering coatings applied to a gas turbine engine component using the hyper-redundant manipulator spray system of FIGS. 2 and 3. The engineering coating material used was a yttria-stabilised zirconia (YSZ), more specifically MSE PRO 8YSZ zirconium oxide yttria-stabilized nanoparticles that are commercially available from MSE Supplies LLC. This engineering coating material was prepared as a 25 wt.% suspension in ethanol, supplied to the atomizing nozzle unit at a flow rate of 5 ml/min, air was supplied to the atomizing nozzle unit 125 at a pressure of 400 kPa (4 bar), and air was supplied to the air nozzle 162 of the burner head 130 at 600 kPa (6 bar) of pressure. The incorporation of YSZ nanoparticles is evident in the engineering coatings produced. The presence of semi-molten and unmolten deposited zones was observed and confirmed by zirconium elemental mapping by electron dispersive spectroscopy.

**FIG. 5** depicts a polished cross-sectional micrograph of a coating applied to a gas turbine engine component 105 using the hyper-redundant manipulator spray system of FIGS. 2 to 4.

**FIG. 6** depicts another polished cross-sectional micrograph of the coating applied to the gas turbine engine component 105 using the hyper-redundant manipulator spray system of FIGS. 2 to 4. The micrograph shows that the coating has a dense vertically cracked structure. Two such cracks, one large small crack 201 and one large vertical crack 202, are highlighted.

**FIG. 7** depicts yet another polished cross-sectional micrograph of the coating applied to a gas turbine engine component 105 using the hyper-redundant manipulator spray system of FIGS. 2 to 4. A vertical crack 203 in the coating is highlighted.

Having a relatively short stand-off distance, i.e. the distance between the end effector 120 (or more specifically the atomizing nozzle unit outlet 128) and the component 105 to which a engineering coating material 102 is applied, impacts the thermal state of the particulates. The nanosized YSZ particulates remain in a hot state upon impact, which promotes sintering upon contact with the component. This sintering phenomenon gives rise to a dense coating.

The flow of air 168 from the air nozzle 162 of the burner head 130 plays an important role in steering the path of the atomized engineering coating material into the combustion zone 164, and more particularly into the flame path hot combustion zone 167. The flow of air 168 also enables a steep thermal gradient across the component, which is primarily responsible for the cracks observed in the engineering coatings shown in FIGS. 6 and 7.

Close coordination between the stand-off distance and the air nozzle 162 can create the right conditions for generating dense vertically cracked structures. As mentioned above, the stand-off distance between the atomizing nozzle unit outlet 128 and the component is typically from 5 mm to 75 mm. In the experiments that provided the results depicted in FIGS. 5 to 7 the distance was 25 mm.

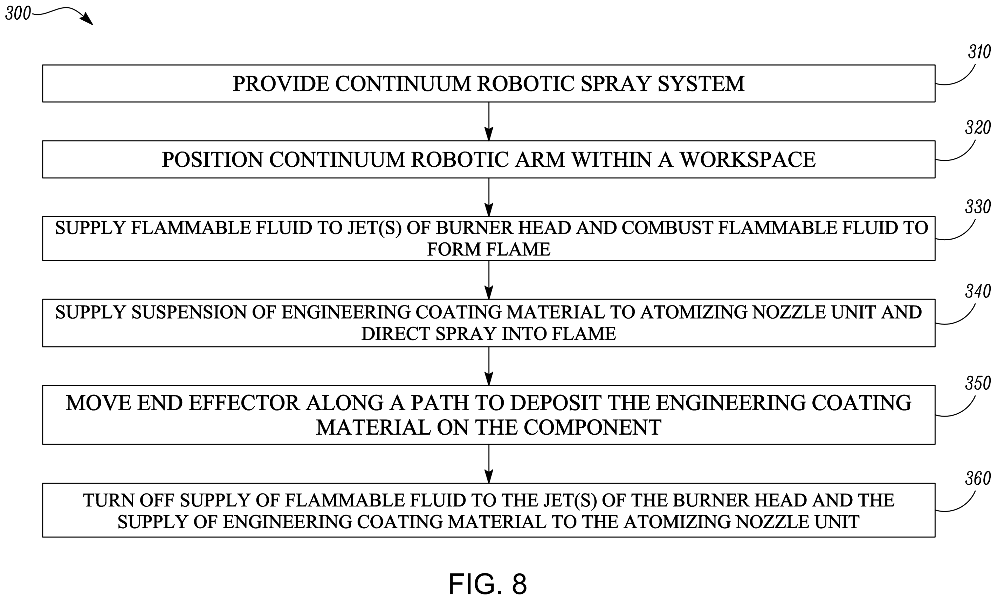

**FIG. 8** is a flow diagram of a method 300 for depositing a coating on a component that is located within a gas turbine engine e.g. using the hyper-redundant manipulator spray system shown in FIGS. to 2 to 4.

In step 310 of the method 300 the hyper-redundant manipulator spray system 100 is provided and set up for use. The set up can involve one or more of the following steps: initiating the hyper-redundant manipulator arm 110, positioning the hyper-redundant manipulator arm in the vicinity of the workspace within the gas turbine engine 10, preparing the suspension of the engineering coating material 102 that is to be deposited on the component 105, supplying the tank 150 with the suspension of the engineering coating material, connecting the conduit 155 to the atomizing nozzle unit 125, connecting supply line 132 to the burner head 130, and/or loading a pre-programmed routine into the controller 145 for the hyper-redundant manipulator arm.

In step 320 the hyper-redundant manipulator arm 110 of the hyper-redundant manipulator spray system 100 is positioned within the workspace in which the component is located. The positioning may be carried out manually or controlled automatically, e.g. by the controller 145. depending on the location of the component within the gas turbine engine.

In step 330 a flammable fluid is supplied to at least one jet 160 of the burner head 130 of the end effector 120 of the hyper-redundant manipulator spray system and combusted to form a flame 166. The flow of the flammable fluid to the jet(s) may be controlled by a valve to control the flame 166 created by combusting the flammable fluid. The valve may be manually controlled or automatically controlled, e.g. by the controller 145. As mentioned above the flammable fluid may take various forms for its required purpose. It may be a gas or a mixture of gases. It may be a liquid fuel or a mixture of liquid fuels. The choice of flammable fluid may at least in part be determined by the configuration of the burner head 130.

In step 340 the atomizing nozzle unit 125 is supplied with a suspension of an engineering coating material 102 and a spray of atomized engineering coating material is directed into the flame 166. The flow of the suspension of an engineering coating material to the atomizing nozzle unit can be controlled manually or automatically, for example using a pressure regulator 129. Any automatic control may be provided via the controller 145.

The engineering coating material may take any form that is suitable for the engineering coating material to be supplied to the hyper-redundant manipulator spray system as a suspension. **It** may be an environmental barrier coating material from which an environmental barrier coating may be formed on a component or a thermal barrier coating material from which a thermal barrier coating may be formed on a component.

The choice of engineering coating material will generally depend on the component to be coated and its location within the gas turbine engine. The engineering coating material may be a yttrium-stabilized zirconia (YSZ), e.g. as used to provide the engineering coatings shown in FIGS. 5 to 7. The engineering coating material may be or also include a mullite, an aluminium oxide (e.g. alumina), a cerium oxide (e.g. CeO₂), a rare-earth zirconate, a metal-glass composite, a ytterbium silicates, or a MCrAlY alloy.

The suspension of engineering coating material may be formulated as required to provide the desired engineering coating for the component concerned. The suspension may contain, for example, from 1 to 50 wt.%, 1 to 40 wt.%, 1 to 30 wt.%, 1 to 20 wt.%, or 1 to 10 wt.% of the engineering coating material. The solvent may be, for example, ethanol, propanol, acetone or water, depending on the engineering coating material, the desired viscosity, and the desired combustion. The suspension of engineering coating material may be heated in the tank 150 to optimise its viscosity and/or to allow a greater weight percentage of the engineering coating material in the suspension to obtained. The tank my be heated by any suitable method, for example electrical resistance heating. The suspension of engineering coating material contain sub-micron or even nano size particulates to achieve durable nano-structed engineering coatings.

In some embodiments the engineering coating material is an ethanol-based suspension feedstock of yttrium-stabilized zirconia. The suspension feedstock may have a sub-micron particle size (D₅₀) of about 500 nm.

The burner head 130 of the end effector 120, may be configured or positioned to direct a spray or stream of atomized engineering coating material perpendicular, or at least substantially perpendicular, to the surface of the component to be coated. Alternatively, the burner head 130 may be position to direct the spray or stream otherwise angled relative to the substrate as desired

In step 350 the end effector 120 is moved along a path to deposit the engineering coating material from the flame 166 on the component 105. The movement of the end effector 120 may be carried out manually or controlled automatically, e.g. by the controller 145, depending on the location of the component within the gas turbine engine. The path may be linear, curved, spiral or according to some other discrete pattern.

The end effector 120 and the hyper-redundant manipulator arm 110 may be configured to remain in a fixed orientation relative to the component. Alternatively, the orientation of the end effector 120 and/or the hyper-redundant manipulator arm 110 may change relative to the component, either by manual control or by automatic control, e.g. by the controller 145. The end effector 120 may oscillate relative to the substrate.

The hyper-redundant manipulator arm 110 may be configured or controlled so that the end effector 120 can alter its lateral or longitudinal position relative to the component whilst moving across the component and depositing the engineering coating material thereon.

The speed of the movement of the end effector 120 may be constant or may be varied as desired, either by manual control or by automatic control, e.g. by the controller 145. Controlling the amount of time that the end effector 120 is positioned over a particular area of the component can determine the amount of engineering coating material that is deposited on the desired surface(s) of the component.

The hyper-redundant manipulator spray system 100 may be configured or controlled to provide a thicker coating over one part of the component and a thinner coating over another part of the component. For example, a central area of the coating may be formed to be thicker than the edges of the coating to allow the coating to blend with any existing coatings, e.g. to provide a clean repair.

In step 360 the supply of the flammable fluid to the at least one jet 160 of the burner head 130 and the supply of the suspension of the engineering coating material 102 to the atomizing nozzle unit 125 is turned off. The end effector 120 and/or the hyper-redundant manipulator arm 110 may be moved to a second position and steps 330-360 performed again for the new position. When the end effector is no longer required to deposit the engineering coating on a component or surface of a component within the workspace, the hyper-redundant manipulator arm can be removed from the workspace.

The hyper-redundant manipulator spray system of the present invention may be used for various processes including crankshaft reconditioning or conditioning, corrosion protection, fouling protection, thermal conductivity or electrical conductivity modification, wear control, or repair.

It will be understood that the invention is not limited to the embodiments above-described and various modifications and improvements can be made without departing from the concepts described herein. Except where mutually exclusive, any of the features may be employed separately or in combination with any other features and the invention extends to and includes all combinations and sub-combinations of one or more features described herein.

## Claims

1. A hyper-redundant manipulator spray system (100) for depositing an engineering coating material (102) on a component (105) that is located within a gas turbine engine (10), the hyper-redundant manipulator spray system comprises:
a hyper-redundant manipulator arm (110) that has a proximal end (111) and a distal end (112);
an end effector (120) that is located at the distal end (112) of the hyper-redundant manipulator arm (110), the end effector having an atomizing nozzle unit (125) and a burner head (130), the burner head having a supply of a flammable fluid;
an actuator pack (140) that is located at the proximal end (111) of the hyper-redundant manipulator arm (111) and controls movement of the hyper-redundant manipulator arm (110); and
a tank (150) for holding the engineering coating material (102) to be deposited on the component (105);
wherein the burner head (130) has at least one jet (160) and an air nozzle (162), the burner head being configured to combust the flammable fluid supplied by the supply of flammable fluid and eject the combusted flammable fluid from the jet (160) to form a combustion zone (164) around a resulting flame (166), the air nozzle (162) being aligned with the jet (160) to direct a flow of air (168) from a supply of air towards the component (105); and
the atomizing nozzle unit (125) is configured to receive a supply of a suspension of engineering coating material (102) from the tank (150) and is provided with a pressurised gas feed (170) to atomize the engineering coating material, the atomizing nozzle unit being positioned to direct a spray (172) of the engineering coating material into the flame (166) provided by the burner head (130) that propels the spray of the engineering coating material on to the component (105) upon which the engineering coating material (102) solidifies.

2. The hyper-redundant manipulator spray system of claim 1, wherein the tank (150) has an agitation device (157) for stirring or otherwise agitating the suspension of engineering coating barrier material (102) within the tank (150).

3. The hyper-redundant manipulator spray system of claim 1 or 2, wherein the air nozzle (162) provides a flow of air at a pressure of from 120 to 1500 kPa (1.2 to 15 bar).

4. The hyper-redundant manipulator spray system of any preceding claim, wherein a conduit (155) connects the tank (150) and the atomizing nozzle unit (125) and a flow regulator (158) is provided for maintaining a constant flow rate of engineering coating material (102) between the tank (150) and the atomizing nozzle unit (125).

5. The hyper-redundant manipulator spray system of claim 4, wherein the flow regulator (158) is formed or located in the conduit (155) that connects the tank (150) and the atomizing nozzle unit (125).

6. The hyper-redundant manipulator spray system of any preceding claim, wherein the tank (150) is located at or near the proximal end (111) of the hyper-redundant manipulator arm (110).

7. The hyper-redundant manipulator spray system of any preceding claim, wherein a flow of air (127) is supplied to the atomizing nozzle unit (125) from a source of air to atomize the suspension of engineering coating material within the atomizing nozzle unit (125).

8. The hyper-redundant manipulator spray system of claim 7, wherein the flow of air (127) is supplied to the atomizing nozzle unit (125) at a pressure of from 120 to 1500 kPa (1.2 to 15 bar).

9. The hyper-redundant manipulator spray system of any preceding claim, wherein the atomizing nozzle unit (125) has a pressure regulator (129) that regulates the flow of atomized engineering coating material (102) from the atomizing nozzle unit (125) into the combustion zone (164).

10. The hyper-redundant manipulator spray system of claim 9, wherein the pressure regulator (129) provides the engineering coating material (102) into the combustion zone (164) at a flow rate of from 0.5 to 50 ml/min.

11. The hyper-redundant manipulator spray system of any preceding claim, wherein the atomizing nozzle unit (125) has an atomizing nozzle unit outlet (128) that is positioned to spray the engineering coating material (102) from 5 to 75 mm above the flame plume.

12. The hyper-redundant manipulator spray system of any preceding claim, wherein the atomizing nozzle unit (125) is configured to spray the engineering coating material (102) at an angle to the flame (166), optionally perpendicular to the flame (166).

13. The hyper-redundant manipulator spray system of any one of claims 1 to 11, wherein the atomizing nozzle unit (125) is configured to spray the engineering coating material (102) in line with the flame (166).

14. The hyper-redundant manipulator spray system of any preceding claim, wherein the end effector (120) is coupled to the hyper-redundant manipulator arm (110) with a rotatable coupling and a drive motor is provided that enables the end effector to oscillate its orientation relative to the hyper-redundant manipulator arm.

15. A method (300) for depositing an engineering coating material (102) on a component (105) that is located within a gas turbine engine (10), the method comprising the steps of:
providing (310) the hyper-redundant manipulator spray system (100) of any preceding claim;
positioning (320) the hyper-redundant manipulator arm (110) of the hyper-redundant manipulator spray system within a workspace in which the component is located;
supplying (330) a flammable fluid to at least one jet (160) of the burner head (130) and combusting the flammable fluid to form a flame (166);
supplying (340) a suspension of an engineering coating material (102) to the atomizing nozzle unit (125) and directing a spray of atomized engineering coating material into the flame (166);
moving (350) the end effector (120) along a path to deposit the engineering coating material from the flame (166) on the component (105); and
turning off (360) the supply of the flammable fluid to the at least one jet (160) of the burner head (130) and the supply of the suspension of the engineering coating material (102) to the atomizing nozzle unit (125).
